# EUROPEAN PATENT SPECIFICATION

(11) **EP 3 106 299 B1**
(45) Date of publication and mention of the grant of the patent: **07.03.2018**
(21) Application number: 16001355.3
(22) Date of filing: 15.06.2016
(51) Int. Cl.: B32B 5/18, B32B 7/04, B32B 27/06, B32B 27/30, C08J 9/14, B29C 44/20

(54) **MULTILAYER FILM FOR MANUFACTURING CONTAINERS, PRODUCING METHOD THEREOF AND CONTAINER COMPRISING THE FILM**
MEHRSCHICHTFOLIE ZUR HERSTELLUNG VON BEHÄLTERN, HERSTELLUNGSVERFAHREN DAFÜR UND BEHÄLTER MIT DIESER FOLIE
FILM MULTICOUCHE POUR FABRIQUER DES RÉCIPIENTS, SON PROCÉDÉ DE FABRICATION ET RÉCIPIENT COMPRENANT LE FILM

(30) Priority: 15.06.2015 IT UB20151388
(43) Date of publication of application: 21.12.2016
(73) Proprietor: Tecno Box S.r.l., 90044 Carini (PA) (IT)
(72) Inventor: Scaturro, Vincenzo, 90129 Palermo (IT)
(74) Representative: Maiello, Helenio Francesco

(56) References cited:
- WO-A1-2010/027655
- WO-A1-2012/099715
- US-A- 6 074 678

## Description

### Technical Field

The present invention finds its application in the packaging industry and it particularly relates to a multilayer film for manufacturing containers suitable particularly but not exclusively for use with food products.

The invention has also for object a method for manufacturing the multilayer film and a container comprising the multilayer film or entirely formed therewith.

### State of the art

It is known the use of multilayer films formed of sheets of different materials for manufacturing boxes or containers in general, since in this way it is possible to realize light and cheap containers.

For example, on the market there is a multilayer film produced and distributed by Isonova with the trade mark Laminil®, which is composed of a central layer in polystyrene foam coated with two thinner outer sheets in cellulosic material.

In general, the coupling between the foam layer and the outer sheets allows the multilayer film to be shaped by making also right angled walls without forming externally visible cracks.

Indeed, the outer sheets have the aim of allowing the bending also at a right angle of the central layer of foam which otherwise would crack.

However, solutions similar to that described above have limited application in several fields, in particular in the food industry where there is a high possibility that the container will be in contact with liquids that would cause damage to the inner layer of cellulosic material.

To overcome at least partially said drawbacks some solutions have been proposed which provide that the core layer of foam is coupled to external sheets also in polymeric material.

For example, from JP2009256682, JPH06297537, JPH06297536 and JP2005232300 are known sheets of composite material designed for manufacturing food boxes and which comprise an expanded polystyrene layer with a minimum density of 50kg/m3 coated by a film also made of polystyrene.

The manufacturing process of the sheet also provides for the formation of V-shaped grooves at the folds needed to shape the box.

However, this solution has proved to be not fully satisfactory both for the choice of materials and for the fact that the foam sheet is coated only internally. WO 2012/099715 A1 discloses a multilayer film for manufacturing containers, comprising an inner layer made of a polystyrene foam and two outer layers coupled to said inner layer and made of polystyrene.

There is the need of a multilayer film that could be used for manufacturing containers also suitable for the preservation of food products and that could also be obtained by bending at a right angle one or more edges of the multilayer film.

### Scope of the invention

The object of the present invention is to overcome the above mentioned drawbacks, by providing a multilayer film for manufacturing containers which has features of high efficiency and relative cheapness.

One particular object is to provide a multilayer film for manufacturing containers having right-angled walls suitable for contact with food products also in the presence of liquid and which do not present cracks or imperfections on the outer surfaces.

Still another object is to provide a multilayer film for manufacturing containers that is particularly lightweight and durable and that can be completely recycled.

Still another object is to provide a multilayer film that allows to produce containers having features of high heat insulation, mechanical strength, flexibility, and which can be manufactured in any colour.

One further object is to provide a method for manufacturing the above multilayer film that is economical and fast and that allows to increase the resistance of the film at the bending areas to allow the container to undergo to very strong mechanical machining of deep drawing.

These objects, as well as others which will become more apparent hereinafter, are obtained by a multilayer film manufacturing containers that, according to claim 1, comprises an inner layer of a first polymeric material and two coating layers coupled to said inner layer from opposing sides with each other to define a unitary multi-layer sheet, wherein said first polymeric material is a polystyrene foam obtained by extrusion of a starting mixture comprising high impact polystyrene (HIPS) and general purpose polystyrene (GPPS) with a percentage by weight less to said high-impact polystyrene, said outer layers being both oriented polystyrene (OPS) with a thickness comprised between 20µm and 30µm, preferably 25µm and which arc hot bonded with said inner layer.

Thanks to this particular combination of features the films will have high strength and at the same time high flexibility and lightness to be folded and shaped as a container having walls angled at a right angle.

Moreover, the presence of the polyester coatings will make the film suitable for making containers for food products suitable for contact with liquid without risk of damage.

Preferably, said starting mixture may comprise high impact polystyrene (HIPS) in a percentage between 60% and 70% of the total weight, general purpose polystyrene (GPPS) in a percentage comprised between 15% and 30% of the total weight, a re-granulated polymeric material in a percentage comprised between 10% and 20% of the total weight and gas in a percentage between 1% and 5% of the total weight.

In this way the film, and consequently the containers made therewith, will be fully recyclable.

According to a further aspect of the invention, a method is provided for manufacturing the multilayer film which comprises the steps of introducing said mixture at a temperature close to 110°C at the head of a tandem type extruder, extruding said mixture at a temperature close to 90°C and with a density between 30 kg/m3 and 100kg/m3 and preferably at 50Kg/m3, injecting a gas at a predetermined injection pressure to obtain a polystyrene foam, curing said polystyrene foam to promote the diffusion of air thereinside for a time sufficient to bring the internal pressure to a final value greater than said injection pressure, mechanically deforming said foam to obtain said inner layer, heat bonding of a coating layer made of oriented polystyrene (OPS) on each of the faces of said inner layer.

In this way, and in particular thanks to the curing step, the foam will increase its thickness before of the mechanical deformation step necessary for its subsequent shaping into the desired shape for the container, thus being able to undergo to stronger thermoforming or embossments that allow it to be more thick and durable at localized zones wherein the film should be folded.

Advantageous embodiments of the invention are obtained in accordance with the dependent claims.

### Best mode of carrying out the invention

According to a preferred but not exclusive embodiment of the invention, a film for manufacturing one or more containers or boxes may be made of an inner layer of a first polymeric material externally coupled with two coating layers placed on opposite sides with each other to define a unitary multilayer sheet.

In particular, the first polymeric material is a polystyrene foam obtained by extrusion of a starting mixture comprising high impact polystyrene (HIPS) and general purpose polystyrene (GPPS) with a weight percentage less than the high-impact polystyrene (HIPS).

In particular, the foam will be obtained starting from a polystyrene raw material having a density of 1050kg/m3 suitable added, extruded and expanded.

In general, the starting mixture comprises high impact polystyrene (HIPS) in a percentage between 60% and 70% of the total weight, general purpose polystyrene (GPPS) in a percentage comprised between 15% and 30% of the weight total, a re-granulated polymeric material, preferably also polystyrene, in a percentage between 10% and 20% of the total weight and gas in a percentage between 1% and 5% of the total weight. Several grades of polystyrene may be used having a viscosity index (Melt Flow Index) variable from 1.5g/10 min to 3g/10 min. The average atomic number of polystyrene ranges from 220,000 to 400,000. The Melt Strength (MS) of the melt at about 150°C varies between 0.3N and 0,4N. The tensile strength modulus of the first polystyrene material is 37MPa, the tensile elastic modulus is 3200 MPa, the Breaking Stretching Ratio (BSR), function of temperature and velocity derivative, varies between 20 and 80 in the working window of the material.

According to a preferred but not limiting composition, the mixture has the following composition:
64% of high-impact polystyrene (HIPS);
17.5% of general purpose polystyrene (GPPS);
15% re-granulated polymeric material;
3% gas;
0.5% mastered talc.

The mixture so dosed is fed to a two-stage or tandem extruder, for example a 90/120 tandem extruder, with a main cylinder having a diameter of 90mm and a temperature profile of about 200°C, a secondary cylinder with a diameter of 120mm and a temperature profile of about 130°C and screw length/diameter ratio of about 30/1.

The pressure at the head of the main cylinder will be preferably of about 150 bar, while the pressure at the head of the secondary cylinder will be about 90 bar. The pressure in the supply chain will be about 70 bar.

The mixture is introduced at the head of the tandem extruder tandem at a temperature close to 110°C and extruded at a temperature close to 90°C.

In the mixing step the foam will be expanded by injecting a gas or mixture of gases, such as commercial isobutane, butane and propane, whose pressure inside the cells of the polymeric material will be equal to 0,3bar.

The foam exiting from the extruder has a density between 30 kg/m3 and 100 kg/m3 and preferably close to 50Kg/m3.

The foam thus obtained outgoes to curing to promote the circulation of air thereinside for a time sufficient to bring the inner pressure to a final value greater than that of the gas injection, and in particular close to 1,3bar.

The mixture emerges from the extruder through a circular spinneret which generates a foam tube which is fitted on suitable steel cylinders to calibrate the width thereof.

After calibration, the foam sheet can be cut longitudinally to obtain a slab designed to be calendered or it could be wound into a coil having a length also of several hundreds of meters.

The width of the foam sheet can be adjusted by changing the calibrators which may have diameters ranging from 750mm to 1050mm. It is also possible to trim the sheet in line with longitudinal cutting knives.

The polystyrene is completely recyclable and therefore all the processing scraps may be reprocessed, for example milled, extruded and re-granulated, to obtain a recycled/re-granulated material very similar to the raw material that may be reintegrated in the production cycle.

During this step the foam sheet thickness may also be adjusted to be between 1.5mm and 10mm.

The foam sheet is subjected to mechanical deformation machining and thermoforming that may comprise the passage of the foam sheet through pressure rollers adapted to adjust the thickness thereof, possibly obtaining greater thicknesses in areas where greater resistance will be necessary, heating the polystyrene foam to a temperature above the melting point to obtain the softening thereof.

A respective hot coating layer of oriented polystyrene (OPS) having a thickness comprised between 20µm and 30µm, preferably 25µm, will be coupled to each face of the foam sheet to realize a multilayer sheet having a final density preferably comprised between 80Kg/m3 and 120kg/m3 and even more preferably between 90Kg/m3 and 10kg/m3.

The coating layers may also be made by extrusion on a special extrusion head.

Further steps of die cutting, deep-drawing, creasing may also be provided for realizing folding lines necessary to form the container.

From above it is clear that the film and the method according to the invention reach the intended object.

The film and the method according to the invention are susceptible of numerous modifications and variations, all falling within the inventive concept expressed in the accompanying claims. All the details may furthermore be replaced with other technically equivalent elements, and the materials may be different according to requirements, without departing from the scope of protection of the present invention.

## Claims

1. A multilayer film for manufacturing containers, comprising an inner layer of a first polymeric material and two coating layers coupled to said inner layer from opposing sides with each other to define a unitary multi-layer sheet, wherein said first polymeric material is a polystyrene foam obtained by extrusion of a starting mixture comprising high impact polystyrene (HIPS) and general purpose polystyrene (GPPS) with weight percentage lower than said high-impact polystyrene, said outer layers being both made of oriented polystyrene (OPS) with thickness between 20µm and 30µm, preferably 25µm and hot coupled with said inner layer.

2. Multilayer film as claimed in claim 1, **characterized in that** said starting mixture comprises high impact polystyrene (HIPS) in a percentage between 60% and 70% of the total weight, general purpose polystyrene (GPPS) in a percentage between 15% and 30% of the total weight, a re-granulated polymeric material in a percentage between 10% and 20% of the total weight and gas in a percentage between 1% and 5% of the total weight.

3. Multilayer film as claimed in claim 2, **characterized in that** said mixture has the following composition:
64% of high-impact polystyrene (HIPS);
17.5% of general purpose polystyrene (GPPS);
15% re-granulated polymeric material;
3% gas;
0.5% mastered talc.

4. Multilayer film as claimed in claim 2 or 3, **characterized in that** said polymeric material is re-granulated polystyrene.

5. Multilayer film as claimed in claim 2 or 3, **characterized in that** said mixture has a density at the output from the extruder between 30Kg/m3 and 100 kg/m3 and preferably close to 50Kg/m3, said multilayer sheet having final density preferably comprised between 80kg/m3 and 120kg/m3 and more preferably between 90Kg/m3 and 100kg/m3.

6. A method for manufacturing a multilayer film for containers, wherein the film is according to one or more of the preceding claims, comprising the following steps:
a) introducing said mixture at a temperature close to 110°C at the head of a tandem type extruder;
b) extruding said mixture at a temperature close to 90°C and with a density between 30kg/m3 and 100kg/m3 and preferably close to 50Kg/m3;
c) injecting a gas at a predetermined injection pressure to obtain a polystyrene foam;
d) curing said polystyrene foam to promote the diffusion of air thereinside for a time sufficient to bring the internal pressure to a final value greater than said injection pressure;
e) mechanically deforming said foam to obtain said inner layer;
f) heat bonding of a coating layer made of oriented polystyrene (OPS) on each of the faces of said inner layer.

7. Method as claimed in claim 6, **characterized in that** said gas injection pressure is close to 0,3bar and said final internal pressure is close to 1,3bar.

8. Method as claimed in claim 6, **characterized in that** said step of mechanical deformation comprises a step of die-cutting of said multilayer sheet for the realization of folding lines.

9. Method as claimed in claim 6, **characterized in that** said step of mechanical deformation comprises a step of die-cutting of said multilayer sheet for the realization of folding lines

10. A food container comprising a multilayer film according to one or more of claims 1 to 5 and made with a method according to one or more of claims 6 to 9.

## Patentansprüche

1. Mehrschichtfolie zum Herstellen von Behältern, umfassend eine Innenschicht aus einem ersten Polymermaterial und zwei Deckschichten, die mit der Innenschicht auf gegenüberliegenden Seiten zueinander gekoppelt sind, um einen einheitlichen Mehrschichtbogen zu definieren, wobei das erste Polymermaterial ein Schaumpolystyrol ist, das durch Extrusion eines Ausgangsgemischs umfassend hochschlagfestes Polystyrol (high impact polystyrene, HIPS) und Normal-Polystyrol (general purpose polystyrene, GPPS) mit einem niedrigeren Gewichtsprozentsatz als das hochschlagfeste Polystyrol erlangt wird, wobei die beiden Außenschichten aus orientiertem Polystyrol (oriented polystyrene, OPS) mit einer Stärke zwischen 20 µm und 30 µm, vorzugsweise 25 µm, gemacht und mit der Innenschicht wärmegekoppelt sind.

2. Mehrschichtfolie nach Anspruch 1, **dadurch gekennzeichnet, dass** das Ausgangsgemisch hochschlagfestes Polystyrol (HIPS) mit einem Prozentsatz zwischen 60 % und 70 % des Gesamtgewichts, Normal-Polystyrol (GPPS) mit einem Prozentsatz zwischen 15 % und 30 % des Gesamtgewichts, ein re-granuliertes Polymermaterial mit einem Prozentsatz zwischen 10 % und 20 % des Gesamtgewichts und Gas mit einem Prozentsatz zwischen 1 % und 5 % des Gesamtgewichts umfasst.

3. Mehrschichtfolie nach Anspruch 2, **dadurch gekennzeichnet, dass** das Gemisch die folgende Zusammensetzung hat:
64 % hochschlagfestes Polystyrol (HIPS);
17,5% Normal-Polystyrol (GPPS);
15 % re-granuliertes Polymermaterial;
3 % Gas;
0,5 % nachbearbeitetes Talkum.

4. Mehrschichtfolie nach Anspruch 2 oder 3, **dadurch gekennzeichnet, dass** das Polymermaterial re-granuliertes Polystyrol ist.

5. Mehrschichtfolie nach Anspruch 2 oder 3, **dadurch gekennzeichnet, dass** das Gemisch eine Dichte am Ausgang des Extruders zwischen 30 kg/m3 und 100 kg/m3 und vorzugsweise in der Nähe von 50 kg/m3 hat, wobei der Mehrschichtbogen eine Enddichte hat, die vorzugsweise zwischen 80 kg/m3 und 120 kg/m3 und mehr vorzugsweise zwischen 90 kg/m3 und 100 kg/m3 liegt.

6. Verfahren zum Herstellen einer Mehrschichtfolie für Behälter, wobei die Folie gemäß einem oder mehrerer der vorherigen Ansprüche ist, umfassend die folgenden Schritte:
a) Einführen des Gemischs bei einer Temperatur in der Nähe von 110 °C am Kopf eines Tandem-Extruders;
b) Extrudieren des Gemischs bei einer Temperatur in der Nähe von 90 °C und mit einer Dichte zwischen 30 kg/m3 und 100 kg/m3 und vorzugsweise in der Nähe von 50 kg/m3;
c) Einspritzen eines Gases mit einem vorbestimmten Einspritzdruck zum Erlangen eines Schaumpolystyrols;
d) Aushärten des Schaumpolystyrols, um die Diffusion von Luft darin über eine ausreichende Zeit zu fördern, um den internen Druck auf einen Endwert zu bringen, der größer als der Einspritzdruck ist;
e) mechanisches Verformen des Schaumstoffs, um die Innenschicht zu erlangen;
f) Heißverkleben einer Deckschicht aus orientiertem Polystyrol (OPS) auf beiden Seiten der Innenschicht.

7. Verfahren nach Anspruch 6, **dadurch gekennzeichnet, dass** der Gaseinspritzdruck in der Nähe von 0,3 bar ist, und dass der interne Enddruck in der Nähe von 1,3 bar ist.

8. Verfahren nach Anspruch 6, **dadurch gekennzeichnet, dass** der Schritt mechanischer Verformung einen Stanz-Schritt des Mehrschichtbogens zum Ausführen von Falzlinien umfasst.

9. Verfahren nach Anspruch 6, **dadurch gekennzeichnet, dass** der Schritt mechanischer Verformung einen Stanz-Schritt des Mehrschichtbogens zum Ausführen von Falzlinien umfasst.

10. Lebensmittelbehälter, umfassend eine Mehrschichtfolie nach einem oder mehreren der Ansprüche 1 bis 5 und hergestellt mit einem Verfahren nach einem oder mehreren der Ansprüche 6 bis 9.

## Revendications

1. Film multicouche pour la fabrication de contenants, comprenant une couche intérieure composée d'un premier matériau polymère et deux couches de revêtement couplées ensemble à ladite couche intérieure depuis les côtés opposés pour créer une feuille multicouche unitaire, dans laquelle ledit premier matériau polymère est une mousse de polystyrène obtenue par l'extrusion d'un mélange initial comprenant du polystyrène choc (PS choc ou HIPS, de l'anglais *high impact polystyrene*) et du polystyrène standard (GPPS, de l'anglais *general purpose polystyrene*) ayant un pourcentage pondéral inférieur audit polystyrène choc, lesdites couches extérieures étant toutes deux composées de polystyrène orienté (OPS, de l'anglais *oriented polystirene*) d'une épaisseur comprise entre 20 µm et 30 µm, de préférence de 25 µm et couplées à chaud à ladite couche intérieure.

2. Film multicouche selon la revendication 1, **caractérisé en ce que** ledit mélange initial comprend du polystyrène choc (HIPS) à raison de 60 % à 70 % du poids total, du polystyrène standard (GPPS) à raison de 15 % à 30 % du poids total, un matériau polymère regranulé à raison de 10 % à 20 % du poids total et du gaz à raison de 1 % à 5 % du poids total.

3. Film multicouche selon la revendication 2, **caractérisé en ce que** ledit mélange présente la composition suivante :
64 % de polystyrène choc (HIPS) ;
17,5 % de polystyrène standard (GPPS);
15 % de matériau polymère regranulé ;
3 % de gaz ;
0,5 % de talc maîtrisé.

4. Film multicouche selon la revendication 2 ou 3, **caractérisé en ce que** ledit matériau polymère est du polystyrène regranulé.

5. Film multicouche selon la revendication 2 ou 3, **caractérisé en ce que** ledit mélange présente une densité à la sortie de l'extrudeuse comprise entre 30 kg/m3 et 100 kg/m3 et de préférence proche de 50 kg/m3, ladite feuille multicouche présentant une densité finale de préférence comprise entre 80 kg/m3 et 120 kg/m3 et idéalement comprise entre 90 kg/m3 et 100 kg/m3.

6. Méthode pour la fabrication d'un film multicouche pour des contenants, dans laquelle le film est conforme à l'une ou plusieurs des revendications précédentes, comprenant les étapes suivantes :
a) l'introduction dudit mélange à une température proche de 110 °C au niveau de la tête d'une extrudeuse de type tandem ;
b) l'extrusion dudit mélange à une température proche de 90 °C et présentant une densité comprise entre 30 kg/m3 et 100 kg/m3, de préférence proche de 50 kg/m3 ;
c) l'injection d'un gaz à une pression d'injection prédéterminée afin d'obtenir une mousse de polystyrène ;
d) le traitement de ladite mousse de polystyrène afin de favoriser la diffusion de l'air en son sein suffisamment longtemps pour que la pression interne atteigne une valeur finale supérieure à ladite pression d'injection ;
e) la déformation mécanique de ladite mousse pour obtenir ladite couche intérieure ;
f) la liaison thermique d'une couche de revêtement composée de polystyrène orienté (OPS) sur chaque face de ladite couche intérieure.

7. Méthode selon la revendication 6, **caractérisée en ce que** ladite pression d'injection du gaz est proche de 0,3 bar et que ladite pression interne finale est proche de 1,3 bar.

8. Méthode selon la revendication 6, **caractérisée en ce que** ladite étape de déformation mécanique comprend une étape d'estampage de ladite feuille multicouche pour la réalisation de lignes de pliage.

9. Méthode selon la revendication 6, **caractérisée en ce que** ladite étape de déformation mécanique comprend une étape d'estampage de ladite feuille multicouche pour la réalisation de lignes de pliage

10. Contenant alimentaire comprenant un film multicouche selon l'une ou plusieurs des revendications 1 à 5 et fabriqué à l'aide d'une méthode selon l'une ou plusieurs des revendications 6 à 9.
